# EUROPEAN PATENT APPLICATION

(11) **EP 4 417 030 A1**
(43) Date of publication of application: **21.08.2024**
(21) Application number: 21963489.6
(22) Date of filing: 19.11.2021
(51) Int. Cl.: A01C 1/06

(54) **DEVICE FOR TREATING SEEDS PRIOR TO SOWING AND USE THEREOF**

(30) Priority: 09.11.2021 BR 102021022476
(71) Applicant: Dos Santos Barbosa, Leandro, 85560-000 Chopinzinho (BR)
(72) Inventor: Dos Santos Barbosa, Leandro, 85560-000 Chopinzinho (BR)
(74) Representative: Cyrson, Matthew Dominic
(86) International application number: PCT/BR2021/050507
(87) International publication number: WO 2023/081985

(57) **Abstract**

This invention belongs to the agriculture segment, in the production of grains, more precisely in a seed treatment equipment for planting, notably said invention conceives equipment (1) for applying products to bare seeds, they are products suitable for treating seeds, be they pesticides, biological products, nutrients, growth regulators, coatings, dyes, polymers, etc. The application is made directly to the seeder or planter implement, which then makes the already treated seeds available for the sowing or planting lines, in order to minimize the damage and disadvantages caused by the current seed treatment process, increase quality and treatment efficiency, provide greater agility in the sowing operation and also, with great relevance, minimize contact and the risks of contamination by pesticides to humans, animals and the environment

## Description

### Technical Field

This invention belongs to the agriculture segment, and relates a seed treatment equipment for planting and its use for applying some products to bare seeds, these products being pesticides, biological products, nutrients, growth regulators, coatings, dyes, polymers, etc.

The application of the seed treatment equipment for planting described here is carried out directly in planters or seeders, which can plant the already treated seeds directly in the soil, in order to minimize the damage and disadvantages caused by the treatment methods currently known in the prior art, increasing quality and treatment efficiency, providing greater agility in the sowing operation and also, with great relevance, minimizing contact and the risks of contamination by pesticides to humans, animals and the environment.

### Description of related art

Seed treatment is one of the essential processes for establishing an adequate plant stand, aiming to obtain greater yields. The necessary products are applied to the seeds to masterfully guarantee protection against pests and initial diseases, and the perfect growth of each future plant.

For this process, as it is still a piece of equipment of varying sizes, a seed treater is necessary. Manufactured in different models, to treat small to large quantities of seeds, seed treatment equipment has different grain reservoir sizes that need to be constantly filled, and from one to several dispensers for applying chemical products or similar products.

Seed treatment is currently done in two ways: TSI (industrial seed treatment) done by multipliers and specialized companies with modern machines, called industrial treaters, which have great production capacity, being the best technology found on the market until now, and the "on farm" treatment, carried out by simpler machines or treaters or even manufactured on the farm itself with much lower quality and without a doubt, what is most used today.

The sowing operation is carried out after and separately from the seed treatment operation, with the seed already treated, the producer sows normally when the conditions are favorable for seed germination.

### Brief summary of the invention

At TSI, the process uses high-tech machines with lower risks of damage and excellent product coverage, however, this treatment is carried out when the seed is packaged for delivery by the multiplier to its customers, remaining for days and even months, until it is sown.

The pesticide remains in direct contact with the seed for long periods, and another negative point of TSI is that it is an incomplete treatment, generally only insecticides, fungicides and polymers are used, but other products such as nutrients, growth regulators and the inoculant (biological product) which is indispensable normally does not come in the TSI, therefore, when the seed arrives at the time of being sown, most of the time it goes through a new inoculation process on the property with conventional treaters, thus considering an "on farm" operation anyway.

In non-industrial treatments, in other words, those carried out directly "on farm", the machines are simpler, and, in the most common ones, the incorporation of the products is done inside a pipe with an endless thread, where it generates a lot of friction and can damage the seed, in others it is a machine that looks more like an inverted frustum cone with a centralized metal worm screw.

These equipment treat large quantities of seed at once by turning the screw bringing the seed from the bottom to the top, there is also a lot of friction which can damage the seed.

Anyway, for these equipment, the biggest disadvantage is when the operator mixes the syrup into the seed, because high doses are poured on top of the seed and the treatment remains non-uniform, where there is accumulation of syrup, the seed coat or shell detaches, which is serious damage to the seed. In all treaters who carry out "on farm" treatment, errors in product dosages are common and, in almost 100% of cases, results in non-uniform treatment.

Under-dosing or over-dosing combined with non-uniformity can interfere with the performance of the products in two ways: deficiency in the control of pests and diseases (underdose) or loss of seed viability (excess) through phytotoxicity.

In both ways, TSI or "on farm", there is normally a risk of contamination of the operator by pesticides, due to neglect in the use of PPE, there is contact of chemicals or treated seeds with the skin and often the hygiene is either not done, or is done ineffectively due to being in the field, being exposed to the product during the entire working day.

This way, the negligence increases the risk of contamination through ingestion when eating, smoking or drinking water, there is also spillage on the ground, both from the chemical mixtures when formulating the syrup and even from the already treated seed itself, which is spilled and not collected when it is supplied to the seeder or planter, posing a risk of environmental contamination and death of animals from ingesting these treated seeds.

Exemplifying the current state of the art, there is document BR112019009437-7 "SEED FLOW CHAMBER FOR CONDITIONING, PROCESSING AND DRYING SEEDS IN A TREATMENT SYSTEM", which describes a seed flow chamber for handling seeds and grains, especially for use with a seed treatment applicator. The seed stream is received through an upper inlet opening configured to receive a seed stream and discharged through a lower discharge opening. A divergent guide member divides the seed stream. A converging guide member arranged below the divergent guide member gathers the seed flow before unloading. The converging member has a downwardly inclined surface and an air vent, such as a plurality of air flow openings connected to a plenum. The air vent is configured to communicate with an air supply. A vacuum vent, disposed below the diverging guide member, is configured to communicate with a vacuum source. A fan system recirculates air between the air vent and the vacuum vent. The dehumidifier can condition the air supply to aid drying.

Document BR202019008122-3 "CONSTRUCTIVE ARRANGEMENT APPLIED IN A SEED SHAKER FOR TREATMENT", on the other hand, describes a main body formed from a steel fairing shaped by a cone frustum, whose upper section internally holds flaps where rods are fixed forming a crosshead that centrally incorporates a hydraulic motor that drives a parallel endless screw, this supported inferiorly on a bearing, the lower section of the fairing projects an exit duct, internally provided with a hatch activated by the release lever tensioned by a spring, and on the side it is provided with a ladder, with this duct receiving the coupling of a discharge hose, which carries the seeds, by gravity, while the upper section, the edges are positioned rings that receive chains, the hydraulic motor being controlled by the tractor's hydraulic system.

Finally, document **PI0601814-9** "EQUIPMENT FOR SEED TREATMENT IN SMALL BATCHES" describes an equipment formed by a tubular body, equipped with a support lever, which contains a worm-type screw driven by an electric motor or other known drive means that, when moving said screw it captures the seeds to be treated by the lower portion directing them vertically upwards, where it comes across a deflector that redirects the seeds downwards, causing a disturbance between seeds and pesticide or similar placed inside the bag or implement box, thus providing uniform and mechanized treatment of the seed in small batches.

Thus, it is clear that the previously cited documents do not present any of the characteristics of the seed treatment equipment for planting now revealed.

### Brief description of the invention

Considering the problems of prior art previously represented, the present seed treatment equipment for planting aims to provide better quality treatment for seeds and reducing contact with pesticides for operators and the environment. This equipment will have intelligent software for its automation, which will manage everything from the entrance of the bare seed without treatment to the exit with the seed already treated, managing the entire seed treatment process, with configuration options for the entire treater and monitoring of its perfect functioning, you will also have the option of connecting to digital agriculture.

The main objective of the present invention is to present the union of two operations that previously occurred separately, to unite the seed treatment operation together and simultaneously the sowing operation in a single operation, reducing the number of equipment taken to the field, reducing the number of operators involved in seed treatment, improving efficiency in supplying stage, reducing the idle time of the implement, increasing sowing yield since determining factors such as soil humidity and sowing window are essential for good germination.

A very important and highly relevant benefit achieved with the invention is the safety regarding the handling of pesticides and other products involved in seed treatment. This handling will be as minimal as possible, drastically reducing the operator's contamination risk, minimizing environmental contamination, as it prevents the spillage of toxic products into the soil.

In short, greater agility in the sowing operation, greater safety for operators, increased productivity, inclusion of digital agriculture and minimization of risks to fauna and the environment.

### Brief description of the drawings

To complement the present description in order to obtain a better understanding of the characteristics of the present invention and in accordance with a preferred practical implementation of the same, the attached description is accompanied by a set of drawings, where, in an exemplified, although not limiting, manner, its operation was represented.

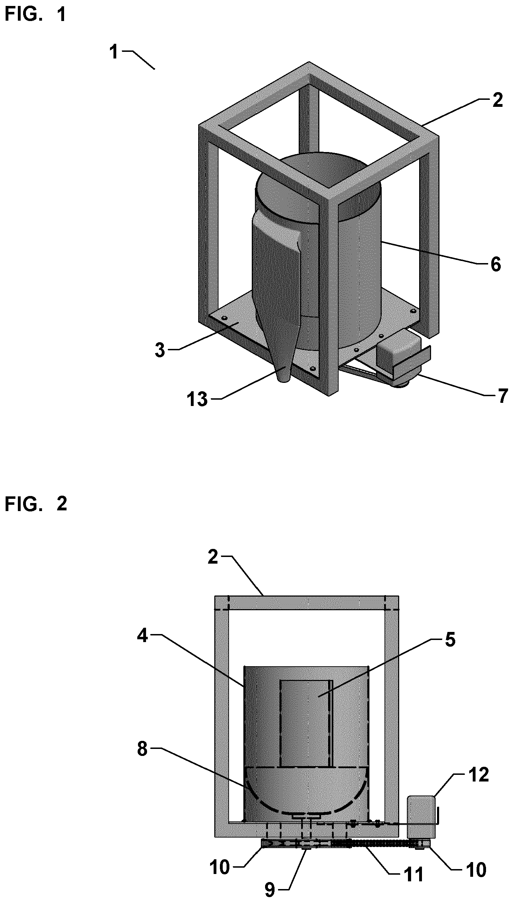

**Fig. 1** shows a top view of the complete treater.
**Fig. 2** shows a side view of the tractor without the fairing.

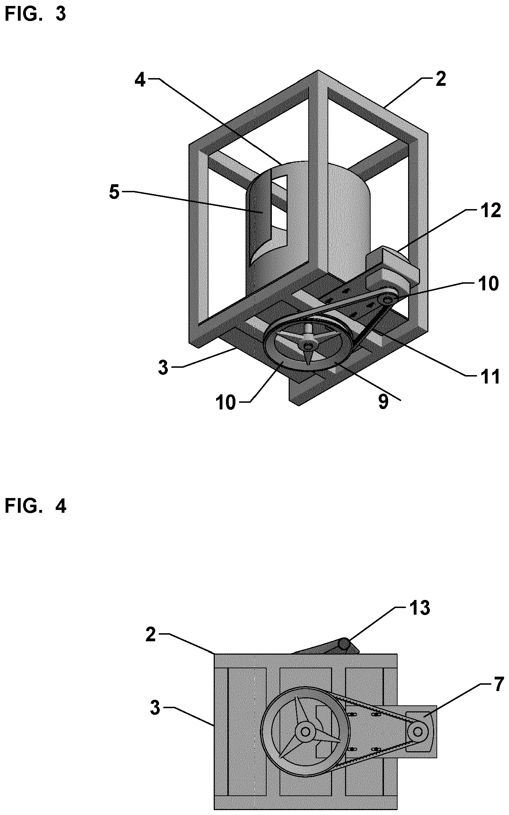

**Fig. 3** shows a lower perspective of the treater highlighting the centrifugal system and the open side door.
**Fig. 4** illustrates a bottom view of the treater with the fairing, showing the seed director.

### Detailed description of the invention

With reference to the illustrated drawings, the present invention refers to a seed treatment equipment for planting, more precisely an equipment (1) to become part of the seeding or planter implement, carrying out the treatment of seeds moments before sowing.

Said equipment (1) is arranged in a metallic tubular structure (2), has a base (3) and receives a vertical circular tube (4), with a door on its side (5), called treatment chamber (6).

At the bottom of the chamber (6) there is a mobile centrifugal system (7), which is composed of plate (8), shaft (9), pulleys (10), belt (11) and hydraulic pump (12) with speed regulation. On the side of the chamber (6), over the door (5), fairing (13), made of fiberglass, is installed, which directs the seeds to the next stage.

According to the present invention, a vacuum system will be used to take doses of seeds to the treatment chamber (6), the centrifugal system (7), with uniform circular movement, throws the seed from the bottom to the walls of the chamber (6), where there are protrusions that throw this seed back to the bottom on top of the plate (8), in a continuous cycle.

At this point, the syrup is added on top of the moving seeds, providing a highly efficient mixture, without any damage to the seeds.

This already treated seed is unloaded from the treatment chamber (6) through the side opening (5) in the tube (4), located at the same level as the edge of the plate (8), with the centrifugal system (7) turned on, automatically with the movement of the plate (8) these treated seeds exit through the opening (5) when it opens at a programmed time, discharging it by gravity to the next seed reservoir, where the graphite will be added and made available to the system vacuum again, which will take this treated seed to the seeding lines so that it can be sown.

Basically, a seed treatment system in conjunction with the seeder or planter implement, a system that will receive the untreated seed from the implement, and will apply the selected products for seed treatment and provide this already treated seed to the implement itself that will carry out the following sowing or planting.

It is true that when the present invention is put into practice, modifications may be introduced with regard to certain details of construction and shape, without this implying departing from the fundamental principles that are clearly substantiated in the claims, thus being understood that the terminology used was not intended to be limiting.

## Claims

1. - **SEED TREATMENT EQUIPMENT FOR PLANTING** in which the equipment (1) comprises pulleys (10), belt (11) and hydraulic pump (12) **wherein** said equipment (1) is arranged in a metallic tubular structure (2) and comprises a base (3) and receives a vertical circular tube (4) with a door on its side (5) called treatment chamber (6); at the bottom of the chamber (6) there is a mobile centrifugal system (7), and be composed of a plate (8), shaft (9), pulleys (10), belt (11) and a hydraulic pump (12) with speed regulation; on the side of the chamber (6), over the door (5), a fairing (13), made of fiberglass, is installed, which directs the seeds to the next stage.

2. **- USE OF THE SEED TREATMENT EQUIPMENT FOR PLANTING,** described in claim 1, **wherein** uses a vacuum system to deliver doses of seeds to the treatment chamber (6); the centrifugal system (7), with uniform circular movement, throws the seed from the bottom to the walls of the chamber (6), where there are protrusions that throw this seed back to the bottom on top of the dish (8), in a continuous cycle; be added to the syrup on top of the moving seeds, without damaging the seed; the unloading of this already treated seed from inside the treatment chamber (6) will be through the side opening (5) in the tube (4), located at the same level as the edge of the plate (8), with the centrifugal system (7) turned on, automatically with the movement of the plate (8) these treated seeds exit through the opening (5) when it opens at a programmed time, discharging it by gravity to the next seed reservoir; graphite must be added and made available to the vacuum system again to take this treated seed to the seeding lines for sowing.
